# EUROPEAN PATENT SPECIFICATION

(11) **EP 1 346 907 B1**
(45) Date of publication and mention of the grant of the patent: **07.05.2008**
(21) Application number: 03006312.7
(22) Date of filing: 20.03.2003
(51) Int. Cl.: B62K 5/04, B62K 25/02

(54) **A suspension for twinned swing-axle wheels of a tilting vehicle**
Doppelschwingarmradaufhängung eines Neigefahrzeugs
Suspension pour double-bras oscillant pour véhicule à bascule

(43) Date of publication of application: 24.09.2003
(73) Proprietor: Renault SAS, 92100 Boulogne Billancourt (FR)
(72) Inventor: Marconi, Pierluigi, 47900 Rimini (IT)
(74) Representative: Guyon, Rodolphe C.

(56) References cited:
- EP-A- 0 606 191
- US-A- 4 887 829
- US-A- 4 974 863

## Description

The present invention relates to a suspension for twinned swing-axle wheels of a tilting vehicle.

The invention applies to vehicles that turn by the combined effect of turning the steering and angling the wheels relative to a plane perpendicular to the ground and transversal to the direction of travel.

Another field of application of the invention is that of axles for vehicles that are required to move across slopes, for example, off-road vehicles. The invention is especially applicable to vehicles having three wheels, to which the present specification refers in particular, but without restricting the scope of the inventive concept.

Suspensions for three-wheeled vehicles have been extensively researched because of the enormous interest that has been created around light-weight vehicles as alleviators of modern city traffic (on account of their small size and low power requirements due to their reduced weight). Some three-wheeled vehicles have a single front steerable wheel and two rear wheels connected by an articulated suspension system in such a way that they can swing relative to each other, thus enabling the vehicle to tilt.

Patent EP-0 606 191 discloses suspensions of this type comprising two forks pivoted to the frame of the tilting vehicle and each mounting one of the two rear wheels. The forks are connected to each other by a "balancer", which is centrally pivoted to the frame so as to rotate in a plane orthogonal to the vehicle's direction of travel, and by two connecting rods, each of which is interposed between one of the forks and one end of the balancer. The balancer is also elastically connected to the frame by a suitable shock absorber.

The Applicant has, however, found that suspensions of this kind are not free of disadvantages and can be improved in several ways, mainly insofar as concerns the control of the vertical forces exerted by the wheels on the ground and the distribution of these forces between the two wheels, which significantly affects the vehicle's performance on the road.

More specifically, the Applicant has noticed that the dynamic behaviour of the vehicle while cornering (oversteering and understeering) is largely due to the lever ratios of the suspension mechanisms.

The present invention has for an object to overcome the disadvantages of prior art by providing a suspension for twinned swing-axle wheels of a tilting vehicle which enables full control of the vertical forces exerted on the ground between the two wheels and whose design parameters can be varied at the design stage according to the performance required of the vehicle, depending on whether it is used for sports riding or not.

These aims and others, which shall become more readily apparent in the course of the description that follows, are achieved by a suspension for twinned swing-axle wheels of a tilting vehicle having the characteristics defined in one or more of the appended claims.

Other technical characteristics and advantages will become more apparent from the detailed description of a preferred non-restricting embodiment of a suspension for twinned swing-axle wheels of a tilting vehicle according to the present invention. The description is set out below with reference to the accompanying drawings which are provided solely for purposes of illustration without restricting the scope of the invention and in which:
- Figure 1 is a perspective view of a three-wheeled tilting vehicle comprising a suspension for twinned swing-axle wheels according to the present invention;
- Figure 2 schematically shows a front view of the suspension of Figure 1 in a first working condition in which the vehicle is travelling in a straight line;
- Figure 3 shows the suspension of Figure 2 in a second working condition in which the vehicle is cornering;
- Figure 4 schematically shows a front view of a second embodiment of the suspension of Figure 1 in a first working condition in which the vehicle is travelling in a straight line;
- Figure 5 shows the suspension of Figure 4 in a second working condition in which the vehicle is cornering;
- Figure 6 schematically shows a side view of the suspension of Figure 1;
- Figure 7 schematically shows a perspective detail view of another form of the suspension according to the present invention;
- Figure 8 is a schematic front view of yet another form of the suspension according to the present invention.

With reference to the accompanying drawings, the numeral 1 denotes in its entirety a three-wheeled tilting vehicle equipped with a suspension 2 according to the present invention.

The vehicle 1 comprises a frame 3 on which a front wheel 4 is rotatably mounted through shock absorbing and steering devices which are of known type and therefore not further described. Two rear wheels 5a, 5b are mounted parallel with each other at the back end 3a the frame 3 to define, together with the front wheel 4, a direction of travel A of the vehicle 1.

The vehicle also comprises an engine and controls that are of well known type and therefore neither described nor illustrated.

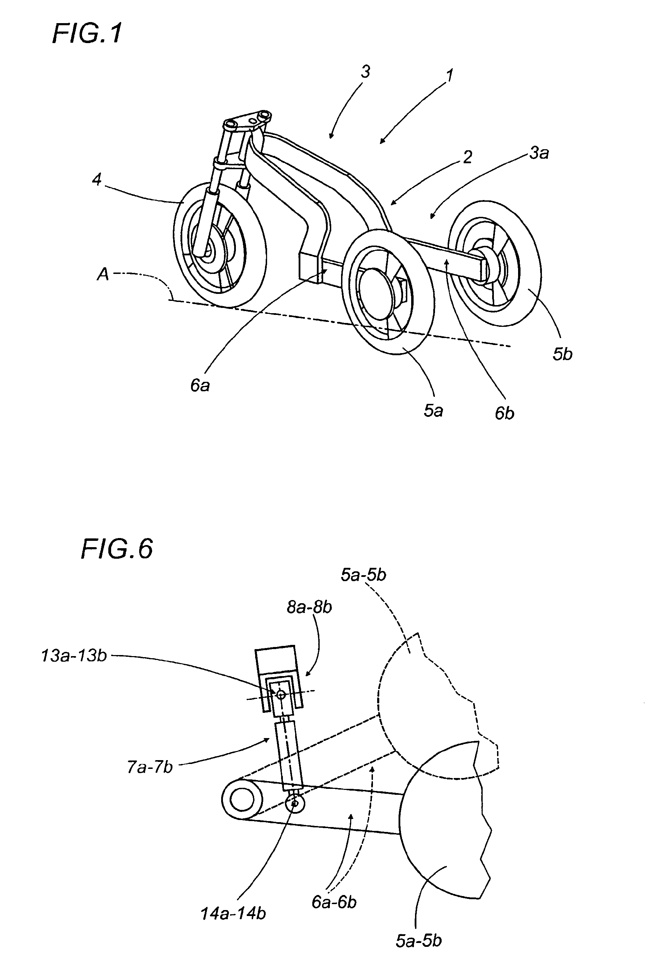

The suspension 2 kinematically connects the pair of rear wheels 5a, 5b to the frame 3. As shown in Figure 1, each of the two rear wheels 5a, 5b is connected to the end of a single-arm swing fork 6a, 6b.

More specifically, the suspension 2 comprises a first swing fork 6a pivoted to the frame 3 and rotatably mounting a first rear wheel 5a, and a second swing fork 6b pivoted to the frame 3 and rotatably mounting a second rear wheel 5b.

A connecting rod 7a, 7b on each swing fork 6a, 6b connects the swing fork 6a, 6b itself to a rocker arm 8a, 8b mounted on the frame 3 through a respective shaft 9a, 9b, in a plane transversal to the direction of travel A, in such a way that the vertical movement of the rear wheels 5a, 5b causes the rocker arms 8a, 8b and the shafts 9a, 9b to turn in the bearings 31, 32 of the frame 3.

The two rocker arms 8a, 8b are connected to each other by a central articulation system 10 which enables the up and down movements of the first wheel 5a and of the second wheel 5b to be controlled by imparting them in series.

Looking in more detail, each of the two rocker arms 8a, 8b has a first end 11a, 11b pivoted to a respective connecting rod 7a, 7b and a second end 12a, 12b linked to the central articulation system 10.

Preferably, each connecting rod 7a, 7b is pivoted to the respective swing fork 6a, 6b at its lower end 14a, 14b and is inclined in such a way that its upper end 13a, 13b (Figure 6) is slightly ahead of the lower end 14a, 14b in the longitudinal plane. The length and inclination of the connecting rods 7a, 7b, both in the longitudinal symmetry plane and in the transversal plane of the vehicle 1 impart on the entire system a well-defined movement which above all determines the behaviour of the vehicle 1 when cornering.

Preferably, for tilting the vehicle considerably without excessively moving the linkage of the central articulation system 10, each connecting rod 7a, 7b is pivoted to the respective swing fork 6a, 6b very close to the point at which the swing fork 6a, 6b is pivoted to the frame 3 (Figure 6), so that when the swing forks 6a, 6b rotate, the vertical movements of the wheels 5a, 5b are much greater than those of the central articulation system 10.

In a first embodiment, illustrated in Figures 1, 2 and 3, the rocker arms 8a, 8b are elongated in shape, with the first ends 11a, 11b, the second ends 12a, 12b and the respective shafts 9a, 9b positioned substantially in line with each other.

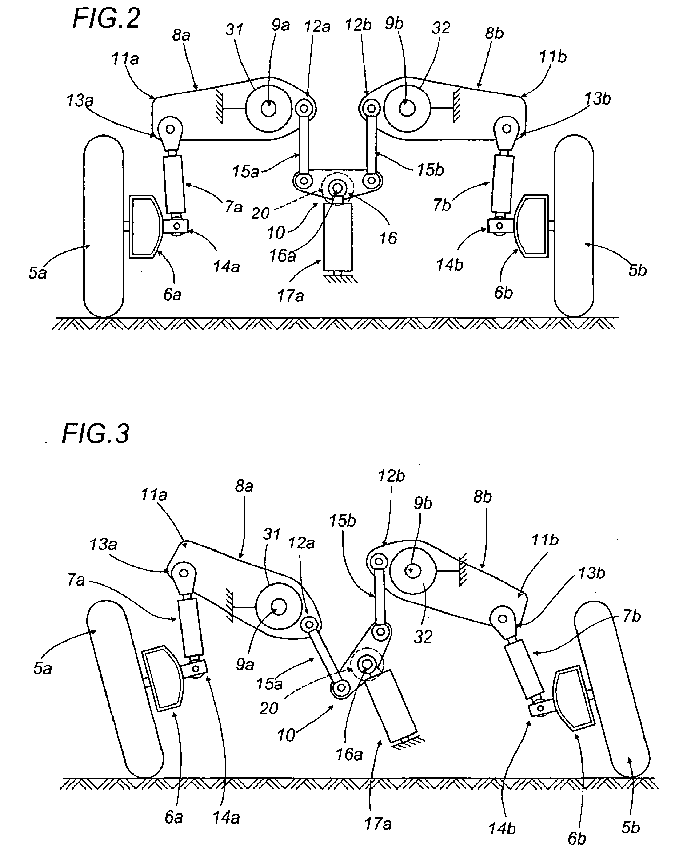

As clearly shown in Figure 2, the central articulation system 10 has two auxiliary connecting rods 15a, 15b, each connected, at the top, to the second end 12a, 12b of the respective rocker arm 8a, 8b and, at the bottom, to a substantially horizontal central link 16.

Advantageously, the central articulation system 10 also comprises a vertical shock absorber 17a pivoted, at the bottom, to the frame 3 of the vehicle 1 and, at the top, to the centre of the link 16 at a pivot 16a that connects it to the link 16 itself.

The suspension 2 made in this way has two degrees of freedom, as explained in more detail below.

The first degree of freedom is defined by the simultaneous movement in opposite directions of the two wheels 5a, 5b, which is the only possible movement when compression and extension of the shock absorber 17a are stopped.

Thus, with reference to Figure 3, the vertical lifting movement of the left-hand rear wheel 5a causes the respective outer connecting rod 7a to swing upwards accordingly, pushing up the first end 11a of the rocker arm 8a and making it rotate clockwise together with its shaft 9a.

The second end 12a of the rocker arm 8a moves the auxiliary connecting rod 15a downwards. The auxiliary connecting rod 15a pushes down on the end of the central link 16 making it rotate about the central pivot 16a and causing the opposite auxiliary connecting rod 15b to swing upwards.

The upward swing of the auxiliary connecting rod 15b linked to the second rocker arm 8b makes the latter rotate clockwise, causing the second wheel 5b to move downwards.

The second degree of freedom, on the other hand, is defined by the simultaneous upward movement of both wheels, the latter being linked to each other, which is the only possible movement when the link 16 is locked in the horizontal position on the shock absorber 17a as a result of the compression or extension of the shock absorber 17a itself.

As explained in more detail below, the movement corresponding to the second degree of freedom can also be obtained with mechanisms of a different type.

Locking the link 16 on the pivot 16a makes it possible to keep the vehicle 1 in a stable position when parked, whether upright or tilted.

During use on the road, the forces acting on the suspension create a combination of these two movements.

For example, when going round a left bend (again with reference to Figure 3), the first wheel 5a moves upwards, the second wheel 5b downwards, and the shock absorber 17a is compressed by centrifugal force.

When only one wheel (for example the first wheel 5a) moves over an obstacle, it moves up in a straight line and remains in a vertical position. The mechanism transmits the movement to the second wheel but the force transmitted to it is opposed by the ground and therefore the wheel remains in the same vertical position.

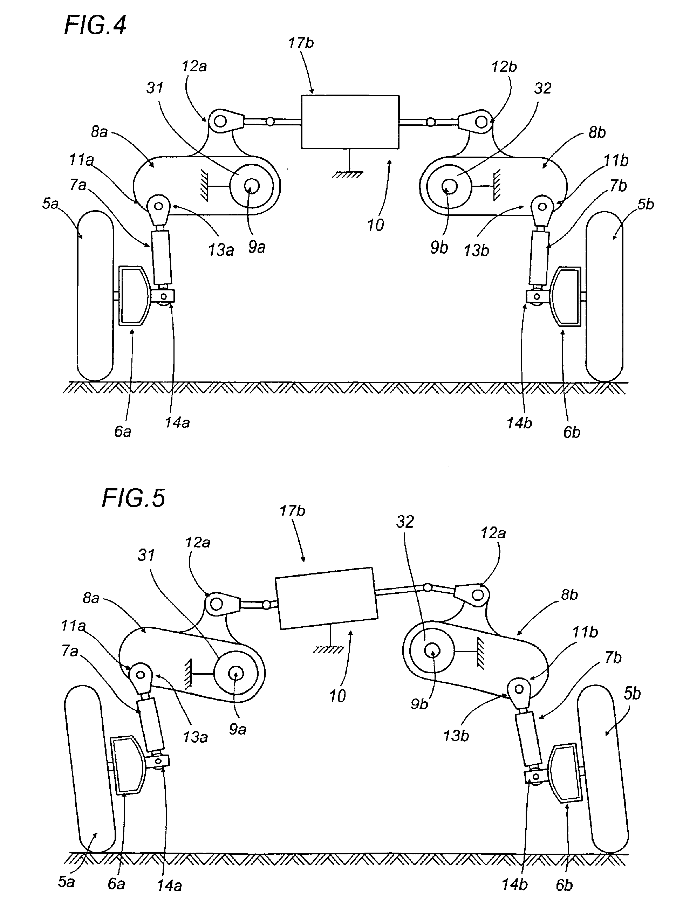

In a second embodiment of the invention, illustrated in Figures 4 and 5, the central articulation system 10 comprises a shock absorber 17b which connects the two second ends 12a, 12b of the rocker arms 8a, 8b, absorbing the shocks transmitted by the road and, at the same time, transmitting motion between the first wheel 5a and the second wheel 5b.

Looking in more detail, each rocker arm 8a, 8b is substantially triangular in shape and has, at its respective vertices, the shaft 9a, 9b, the first end 11a, 11b and the second end 12a, 12b.

In this second embodiment, the second ends 12a, 12b lie in a plane above those in which the first ends 11a, 11b and the shafts 9a, 9b lie, and the shock absorber 17b, which is mounted horizontally, directly connects the two second ends 12a, 12b.

The suspension 2 made according to the second embodiment also has two degrees of freedom, as explained in more detail below.

The first degree of freedom is defined by the simultaneous movement in opposite directions of the two wheels 5a, 5b, which is the only possible movement when compression and extension of the shock absorber 17b are stopped.

Thus, with reference to Figure 5, the vertical lifting movement of the left-hand rear wheel 5a causes the respective outer connecting rod 7a to swing upwards accordingly, pushing up the first end 11a of the rocker arm 8a and making it rotate clockwise together with its shaft 9a.

The second end 12a of the rocker arm 8a moves the shock absorber 17b towards the right. The movement of the shock absorber 17b, which pushes the second end 12b of the second rocker arm 8b makes the second rocker arm 8b rotate clockwise, thus causing the second wheel 5b to move downwards.

The second degree of freedom, on the other hand, is defined by the simultaneous vertical movement of both wheels, the latter being linked to each other, which is the only possible movement when the shock absorber 17b is locked in the horizontal position but allowed to be compressed or extended in the horizontal plane in which the shock absorber 17b itself lies. In this instance, the rotation of the rocker arms 8a, 8b is symmetrical: one rotates clockwise, the other counterclockwise. The two rocker arms 8a, 8b thus rotate in opposite directions and by the same angle, applying the same compressive force on the ends of the shock absorber 17b.

During use on the road, the forces acting on the suspension create a combination of these two movements.

For example, when going round a left bend (again with reference to Figure 5), the first wheel 5a moves upwards, the second wheel 5b downwards, and the shock absorber 17a, on account of centrifugal force, is more compressed than it is when the vehicle is moving in a straight line.

When only one wheel (for example the first wheel 5a) moves over an obstacle, it moves up in a straight line and remains in a vertical position. The mechanism transmits the movement to the second wheel but the force transmitted to it is opposed by the ground and therefore the wheel remains in the same vertical position.

In both the embodiments, the size and position of the linkage and shock absorber determine the kinematic and dynamic behaviour of the suspension, which in turn affect the behaviour of the vehicle and the driver's feel, especially when negotiating corners.

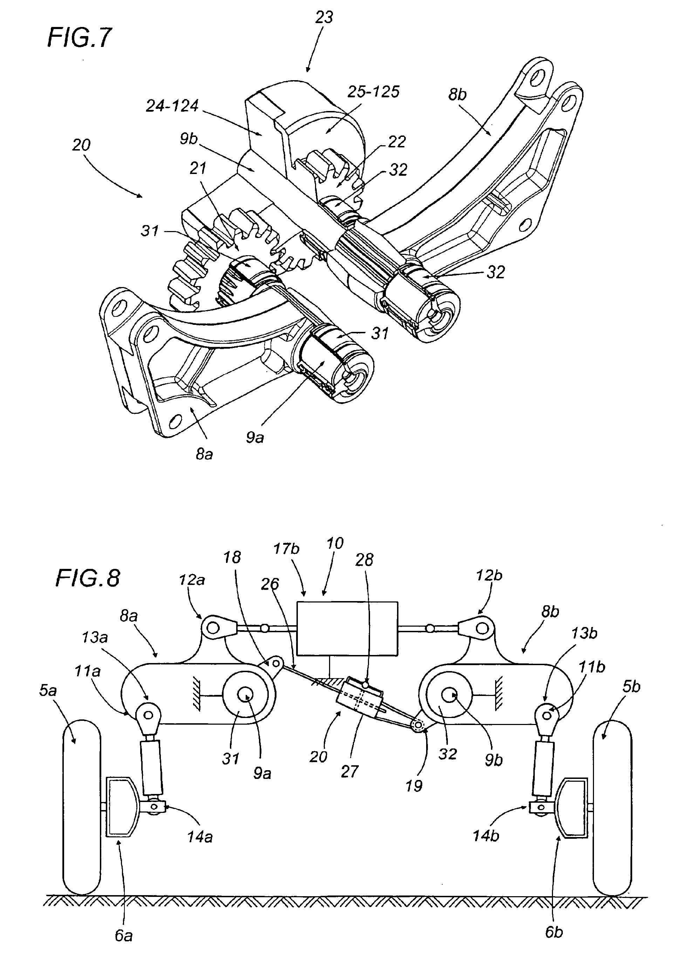

Figures 7 and 8 show other forms according to the invention which may be applied to the embodiments of the suspension 2 described above.

In the forms shown in Figures 7 and 8, the rocker arms 8a, 8b are connected by releasable coupling means 20 which determine a symmetrical movement of the rocker arms 8a, 8b themselves, so that the operation of the suspension 2 is such that the only possible movement, corresponding to the second degree of freedom, is the simultaneous vertical movement of both wheels, which are linked to each other.

This operating condition corresponds to the condition described above where the link 16 is locked on the pivot 16a relative to the shock absorber 17a.

The main purpose of this condition is to keep the vehicle 1 in a stable position even when it is stationary, for example when it is parked in an upright or tilted position.

The vehicle can in fact be stopped in a tilted position or in an upright position on a slope transversal to it.

To achieve this, the coupling means 20 can be locked or released by pressing a button (not illustrated), by acting on the accelerator control - that is by stepping on the accelerator pedal - or by using any of the other driving controls (brake, clutch, etc), in combination with the ignition key, or using the latter alone.

The operation of the vehicle in upright position on a slope transversal to it may also be useful for off-road vehicles.

In this case, the coupling means 20 comprise a motor (not illustrated) capable of changing the vehicle's tilted attitude.

The invention therefore pertains also to an axle with tilting wheels and each axle can be applied to a vehicle with any number of wheels, for example, four or six wheels, that is to say, with two or three axles according to the invention.

To drive the coupling means 20 and the motor, the invention contemplates the provision of appropriate control means, preferably electronic (or electric) also connected to the control button and/or to the accelerator control and/or to the vehicle ignition key.

Figure 7 shows a first exemplary form of the coupling means 20, comprising a first toothed wheel 21 that is rotatably mounted on the first shaft 9a and a second toothed wheel 22 that meshes with the first toothed wheel 21 and that turns freely relative to the second shaft 9b.

The second toothed wheel 22 and the second shaft 9b are associated with each other by connecting means 23.

The connecting means 23 may consist of a customary friction clutch comprising one or more discs 24 (not illustrated in detail) connected to the second shaft 9b, a housing 25 and one or more discs (not illustrated in detail) connected to the second toothed wheel 22.

Alternatively, the connecting means 23 may comprise a single disc friction clutch (not illustrated) or may be embodied as a drum brake with a drum 125 and shoes 124 (not illustrated in detail) or as a disc brake (not illustrated).

When the connecting means 23 are actuated (in known manner and therefore not illustrated), the second shaft 9b and the toothed wheel 22 are coupled to each other and, therefore, the rocker arms 8a, 8b are driven simultaneously and in symmetrical fashion, thus moving both wheels 5a, 5b, which are coupled to each other, in a vertical direction.

Figure 8 shows a second exemplary form of the coupling means 20.

In this case, the means 20 consist of a connecting rod 26 connected to the rocker arms 8a, 8b through two protrusions 18, 19, which are located, respectively, at the top and at the bottom of the rocker arms 8a, 8b, so as to create a simultaneous symmetrical movement like that of the first exemplary form described above with reference to Figure 7.

The connecting rod 26 comprises a straight coupling 27, that can be engaged and released at any point, so that the connecting rod 26 can be engaged at an assigned length to determine the aforementioned symmetrical movement of the rocker arms 8a, 8b, or the coupling 27 may be released so that the connecting rod 26 can extend freely, allowing the rocker arms 8a, 8b to move freely with it.

In the exemplary shown in Figure 8, the clutch 27 is a hydraulic cylinder in which the piston can be locked at any position by shutting off the flow of hydraulic fluid through a valve 28.

Other types of straight couplings 27, which can be engaged and released by mechanical and/or electrical means, may be used.

The present invention overcomes the disadvantages of prior art and thus achieves the above mentioned aims.

In particular, the invention makes it possible to combine the riding style typically used for motorcycles with the stability of vehicles with more than two wheels under static conditions (when the vehicle is stationary) and dynamic conditions.

Thus, the present invention allows complete control of the vertical forces applied to the ground and distributed between the two wheels, thanks to the presence of a series of progressive linkages that vary the amount of force applied to the ground according to the relative positions of the lever arms.

Further, the present invention permits the design parameters of the vehicle to be varied at the design stage according to the performance required of the vehicle, depending on whether it is used for sports riding or not.

Indeed, the more easily the mechanism allows the vehicle to be tilted, in terms of both prompt response to the tilting command and sensitivity of the tilting controls, the more sports-like the riding style will be, requiring of the driver all the more alertness and quickness of action.

On the other hand, lever lengths and pivot points chosen in such a way as to make it less easy to tilt the vehicle ensure greater longitudinal and vertical stability, although less responsive.

It will be understood that the invention described may be useful in many industrial applications and may be modified and adapted in several ways without thereby departing from the scope of the inventive concept as defined in the claims.

### List of reference characters

- 1: vehicle
- 2: suspension
- 3: frame
- 4: front wheel
- 5a, 5b: rear wheels
- 6a, 6b: swing forks
- 7a, 7b: connecting rods
- 8a, 8b: rocker arms
- 9a, 9b: shafts
- 10: central articulation system
- 11a, 11b: first ends of rocker arms 8a, 8b
- 12a, 12b: second ends of rocker arms 8a, 8b
- 13a, 13b: upper ends of connecting rods 7a, 7b
- 14a, 14b: lower ends of connecting rods 7a, 7b
- 15a, 15b: auxiliary connecting rods
- 16: link
- 16a: pivot at centre of link 16
- 17a, 17b: shock absorbers
- 18, 19: protrusions of rocker arms 8a, 8b
- 20: coupling means
- 21, 22: toothed wheels
- 23: connecting means
- 24: discs
- 25: housing
- 26: connecting rod
- 27: straight coupling
- 28: valve
- 31, 32: bearings of shafts 9a, 9b
- 124: shoes
- 125: drum
- A: direction of travel

## Claims

1. A suspension for twinned swing-axle wheels of a tilting vehicle, comprising:
- a first swing fork (6a) pivoted to a frame (3) of a tilting vehicle (1) and rotatably mounting a first wheel (5a);
- a second swing fork (6b) pivoted to the frame (3) parallel to the first swing fork (6a) and rotatably mounting a second wheel (5b); the first and second wheels (5a, 5b) being parallel to each other to define a direction of travel (A);
- a connecting rod (7a, 7b) connected to each swing fork (6a, 6b);
the suspension being **characterised in that** it further comprises:
- two rocker arms (8a, 8b) rotatably mounted on the frame (3) in a plane transversal to the direction of travel (A), and each connected through one of the connecting rods (7a, 7b) to the respective swing fork (6a, 6b), in such manner that vertical movement of the wheels (5a, 5b) causes the rocker arms (8a, 8b) to rotate;
- a central articulation system (10) which kinematically connects the rocker arms (8a, 8b) so as to enable the up and down movements of the first wheel (5a) and of the second wheel (5b) to be controlled by imparting them in series.

2. The suspension according to claim 1, **characterised in tha**t each of the two rocker arms (8a, 8b) has a first end (11a, 11b) pivoted to a respective connecting rod (7a, 7b) and a second end (12a, 12b) linked to the central articulation system (10).

3. The suspension according to claim 2, the central articulation system (10) comprises:
- two auxiliary connecting rods (15a, 15b), each connected, at the top, to the second end (12a, 12b) of the respective rocker arm (8a, 8b) and, at the bottom, to a substantially horizontal central link (16);
- a vertical shock absorber (17a) pivoted, at the bottom, to the frame (3) of the vehicle (1) and, at the top, to a pivot (16a) at the centre of the central link (16).

4. The suspension according to claim 2, **characterised in that** the central articulation system (10) comprises:
- a shock absorber (17b) which connects the two second ends (12a, 12b) of the rocker arms (8a, 8b) and which absorbs the shocks transmitted by the road and, at the same time, transmits motion between the first wheel (5a) and the second wheel (5b).

5. The suspension according to one of the foregoing claims, **characterised in that** it comprises releasable coupling means (20) designed to couple and uncouple the rocker arms (8a, 8b) so that the rocker arms (8a, 8b) rotate symmetrically by equal amounts, causing a simultaneous vertical movement of both wheels (5a, 5b).

6. The suspension according to claim 5, **characterised in tha**t the coupling means (20) comprise a first toothed wheel (21) that is rotatably mounted on the first rocker arm (8a) and a second toothed wheel (22) that meshes with the first toothed wheel (21) and that can turn freely relative to the second rocker arm (8b).

7. The suspension according to claim 6, **characterised in that** the second toothed wheel (22) is connected to the second rocker arm (8b) through connecting means (23).

8. The suspension according to claim 7, **characterised in that** the connecting means (23) comprise a friction clutch (24, 25).

9. The suspension according to claim 7, **characterised in that** the connecting means (23) comprise a drum brake (124, 125) or a disc brake.

10. The suspension according to claim 5, **characterised in that** the coupling means (20) comprise a connecting rod (26) connected to the rocker arms (8a, 8b) through two protrusions (18, 19), which are located, respectively, at the top and at the bottom of the rocker arms (8a, 8b).

11. The suspension according to claim 10, **characterised in that** the connecting rod (26) comprises a straight coupling (27) that can be engaged and released at any point, so that the connecting rod (26) can be engaged at an assigned length to determine the symmetrical movement of the rocker arms (8a, 8b), or the coupling (27) may be released so that the connecting rod (26) can extend freely, allowing the rocker arms (8a, 8b) to move freely with it.

12. A tilting vehicle comprising:
- a frame (3);
- at least one front wheel (4);
- a first rear wheel (5a) and a second rear wheel (5b);
the vehicle being **characterised in that** it further comprises a rear wheel (5a, 5b) suspension (2) as defined in one or more of the foregoing claims from 1 to 11.

## Patentansprüche

1. Aufhängung für Doppelschwingarmräder eines Neigefahrzeugs, die Folgendes umfasst:
- eine erste Schwinggabel (6a), die an einem Rahmen (3) eines Neigefahrzeugs (1) angelenkt ist und ein erstes Rad (5a) drehbar befestigt;
- eine zweite Schwinggabel (6b), die parallel zur ersten Schwinggabel (6a) am Rahmen (3) angelenkt ist und ein zweites Rad (5b) drehbar befestigt; wobei das erste und das zweite Rad (5a, 5b) parallel zueinander verlaufen, um eine Fahrrichtung (A) zu definieren;
- eine Verbindungsstange (7a, 7b), die mit jeder Schwinggabel (6a, 6b) verbunden ist;
**dadurch gekennzeichnet, dass** die Aufhängung weiterhin Folgendes umfasst:
- zwei Schwingen (8a, 8b), die in einer quer zur Fahrrichtung (A) verlaufenden Ebene drehbar am Rahmen (3) angebracht und jeweils durch eine der Verbindungsstangen (7a, 7b) mit der jeweiligen Schwinggabel (6a, 6b) so verbunden sind, dass eine Vertikalbewegung der Räder (5a, 5b) ein Drehen der Schwingen (8a, 8b) bewirkt;
- ein mittleres Gelenksystem (10), das die Schwingen (8a, 8b) kinematisch verbindet, um eine Steuerung der Auf- und Abbewegungen des ersten Rads (5a) und des zweiten Rads (5b) zu ermöglichen, indem es sie nacheinander beaufschlagt.

2. Aufhängung nach Anspruch 1, **dadurch gekennzeichnet, dass** jede der Schwingen (8a, 8b) ein erstes Ende (11a, 11b), das an einer jeweiligen Verbindungsstange (7a, 7b) angelenkt ist, und ein zweites Ende (12a, 12b), das mit dem mittleren Gelenksystem (10) verbunden ist, aufweist.

3. Aufhängung nach Anspruch 2, **dadurch gekennzeichnet, dass** das mittlere Gelenksystem (10) Folgendes umfasst:
- zwei Hilfsverbindungsstangen (15a, 15b), die jeweils oben mit dem zweiten Ende (12a, 12b) der jeweiligen Schwinge (8a, 8b) und unten mit einem im Wesentlichen horizontalen mittleren Zwischenglied (16) verbunden sind;
- einen vertikalen Stoßdämpfer (17a), der unten am Rahmen (3) des Fahrzeugs (1) und oben an einem Drehzapfen (16a) in der Mitte des mittleren Zwischenglieds (16) angelenkt ist.

4. Aufhängung nach Anspruch 2, **dadurch gekennzeichnet, dass** das mittlere Gelenksystem (10) Folgendes umfasst:
- einen Stoßdämpfer (17b), der die beiden zweiten Enden (12a, 12b) der Schwingen (8a, 8b) miteinander verbindet und der die durch die Straße übertragenen Stöße dämpft und gleichzeitig eine Bewegung zwischen dem ersten Rad (5a) und dem zweiten Rad (5b) überträgt.

5. Aufhängung nach einem der vorhergehenden Ansprüche, **dadurch gekennzeichnet, dass** sie lösbare Kopplungsmittel (20) umfasst, die zum Koppeln und Entkoppeln der Schwingen (8a, 8b) ausgeführt sind, so dass sich die Schwingen (8a, 8b) in einem gleichen Maß symmetrisch drehen, wodurch eine gleichzeitige vertikale Bewegung beider Räder (5a, 5b) bewirkt wird.

6. Aufhängung nach Anspruch 5, **dadurch gekennzeichnet, dass** die Kopplungsmittel (20) ein erstes Zahnrad (21), das drehbar an der ersten Schwinge (8a) angebracht ist, und ein zweites Zahnrad (22), das mit dem ersten Zahnrad (21) kämmt und sich bezüglich der zweiten Schwinge (8b) frei drehen kann, umfassen.

7. Aufhängung nach Anspruch 6, **dadurch gekennzeichnet, dass** das zweite Zahnrad (22) durch Verbindungsmittel (23) mit der zweiten Schwinge (8b) verbunden ist.

8. Aufhängung nach Anspruch 7, **dadurch gekennzeichnet, dass** die Verbindungsmittel (23) eine Reibkupplung (24, 25) umfassen.

9. Aufhängung nach Anspruch 7, **dadurch gekennzeichnet, dass** die Verbindungsmittel (23) eine Trommelbremse (124, 125) oder eine Scheibenbremse umfassen.

10. Aufhängung nach Anspruch 5, **dadurch gekennzeichnet, dass** die Kopplungsmittel (20) eine Verbindungsstange (26) umfassen, die durch zwei Vorsprünge (18, 19), die sich oben bzw. unten an den Schwingen (8a, 8b) befinden, mit den Schwingen (8a, 8b) verbunden sind.

11. Aufhängung nach Anspruch 10, **dadurch gekennzeichnet, dass** die Verbindungsstange (26) ein gerades Kopplungsstück (27) umfasst, das an beliebiger Stelle in Eingriff genommen und freigegeben werden kann, so dass die Verbindungsstange (26) in einer bestimmten Länge in Eingriff genommen werden kann, um die symmetrische Bewegung der Schwingen (8a, 8b) zu bestimmen, oder das Kopplungsstück (27) freigegeben werden kann, so dass sich die Verbindungsstange (26) frei ausstrecken kann, wodurch gestattet wird, dass sich die Schwingen (8a, 8b) frei damit bewegen.

12. Neigefahrzeug, das Folgendes umfasst:
- einen Rahmen (3);
- mindestens ein vorderrad (4);
- ein erstes Hinterrad (5a) und ein zweites Hinterrad (5b);
**dadurch gekennzeichnet, dass** das Fahrzeug weiterhin eine Hinterrad(5a, 5b)-Aufhängung (2) nach einem oder mehreren der vorhergehenden Ansprüche 1 bis 11 umfasst.

## Revendications

1. Suspension pour roues jumelées montées sur les doubles bras oscillants d'un véhicule inclinable, comprenant :
- une première fourche oscillante (6a) raccordée de façon pivotante à un cadre (3) d'un véhicule inclinable (1) et sur laquelle une première roue (5a) est montée de façon rotative ;
- une deuxième fourche oscillante (6b) raccordée de façon pivotante au cadre (3) parallèle à la première fourche oscillante (6a) et sur laquelle une deuxième roue (5b) est montée de façon rotative ; la première et la deuxième roues (5a, 5b) étant parallèles l'une à l'autre pour définir une direction de marche (A) ;
- une biellette (7a, 7b) raccordée à chaque fourche oscillante (6a, 6b) ;
la suspension étant **caractérisée en ce qu'**elle comprend en outre :
- deux bras oscillants (8a, 8b) montés de façon rotative sur le cadre (3) dans un plan transversal à la direction de marche (A), et raccordés chacun par le biais d'une des biellettes (7a, 7b) à la fourche oscillante respective (6a, 6b), de telle manière que le mouvement vertical des roues (5a, 5b) cause la rotation des bras oscillants (8a, 8b) ;
- un système d'articulation central (10) qui relie cinématiquement les bras oscillants (8a, 8b) de manière à permettre que les mouvements vers le haut et vers le bas de la première roue (5a) et de la deuxième roue (5b) soient contrôlés en les communiquant en série.

2. Système de suspension selon la revendication 1, **caractérisé en ce que** chacun des bras oscillants (8a, 8b) comprend une première extrémité (11a, 11b) raccordée de façon pivotante à une biellette respective (7a, 7b) et une deuxième extrémité (12a, 12b) reliée au système d'articulation central (10).

3. Suspension selon la revendication 2, **caractérisée en ce que** le système d'articulation central (10) comprend :
- deux biellettes auxiliaires (15a, 15b), raccordées chacune, à leur partie supérieure, à la deuxième extrémité (12a, 12b) du bras oscillant respectif (8a, 8b) et, à leur partie inférieure, à une liaison centrale sensiblement horizontale (16) ;
- un amortisseur vertical (17a) raccordé de façon pivotante, à sa partie inférieure, au cadre (3) du véhicule (1) et, à sa partie supérieure, à un pivot (16a), au centre de la liaison centrale (16).

4. Suspension selon la revendication 2, **caractérisée en ce que** le système d'articulation central (10) comprend :
- un amortisseur (17b) qui raccorde les deux deuxièmes extrémités (12a, 12b) des bras oscillants (8a, 8b) et qui absorbe les chocs transmis par la route et qui, en même temps, transmet le mouvement entre la première roue (5a) et la deuxième roue (5b).

5. Suspension selon l'une quelconque des revendications précédentes, **caractérisée en ce qu'**elle comprend un moyen d'accouplement libérable (20) conçu pour accoupler et désaccoupler les bras oscillants (8a, 8b) de telle façon que les bras oscillants (8a, 8b) tournent symétriquement de valeurs égales, causant un mouvement vertical simultané des deux roues (5a, 5b).

6. Suspension selon la revendication 5, **caractérisée en ce que** les moyens d'accouplement (20) comprennent une première roue dentée (21) qui est montée de façon rotative sur le premier bras oscillant (8a) et une deuxième roue dentée (22) qui est engrenée avec la première roue dentée (21) et qui peut tourner librement par rapport au deuxième bras oscillant (8b).

7. Suspension selon la revendication 6, **caractérisée en ce que** la deuxième roue dentée (22) est raccordée au deuxième bras oscillant (8b) par le biais du moyen de liaison (23).

8. Suspension selon la revendication 7, **caractérisée en ce que** le moyen de liaison (23) comprend un embrayage à friction (24, 25).

9. Suspension selon la revendication 7, **caractérisée en ce que** le moyen de liaison (23) comprend un frein à tambour ou un frein à disque (124, 125).

10. Suspension selon la revendication 5, **caractérisée en ce que** le moyen d'accouplement (20) comprend une biellette (26) reliée aux bras oscillants (8a, 8b) par le biais de deux saillies (18, 19), qui sont situées, respectivement, à la partie supérieure et à la partie inférieure des bras oscillants (8a, 8b).

11. Suspension selon la revendication 10, **caractérisée en ce que** la biellette (26) comprend un accouplement droit (27) qui peut être engagé et libéré à n'importe quel point, de telle sorte que la biellette (26) peut être engagée à une longueur établie pour déterminer le mouvement symétrique des bras oscillants (8a, 8b), ou l'accouplement (27) peut être libéré de telle sorte que la biellette (26) peut s'étendre librement, permettant aux bras oscillants (8a, 8b) de se déplacer librement avec elle.

12. Véhicule inclinable comprenant:
- un cadre (3) ;
- au moins une roue avant (4) ;
- une première roue arrière (5a) et une deuxième roue arrière (5b) ;
le véhicule étant **caractérisé en ce qu'**il comprend en outre une suspension (2) pour les roues arrière (5a, 5b) telle que définie dans une ou dans plusieurs des revendications 1 à 11 précédentes.
